# EUROPEAN PATENT APPLICATION

(11) **EP 4 790 553 A1**
(43) Date of publication of application: **12.08.2026**
(21) Application number: 26156304.3
(22) Date of filing: 04.02.2026
(51) Int. Cl.: G06F 9/445, G06F 9/451, G05B 19/00, G06N 20/00

(54) **GENERATIVE ARTIFICIAL INTELLIGENCE-DRIVEN INTERFACE FOR INDUSTRIAL AUTOMATION APPLICATION ASSISTANCE**

(30) Priority: 11.02.2025 US 202519050702
(71) Applicant: Rockwell Automation Technologies, Inc., Mayfield Heights, OH 44124 (US)
(72) Inventor: Rogers, Angelica B., Mayfield Heights, OH 44124 (US); Visoky, Jack M., Mayfield Heights, OH 44124 (US); Suggs, Brian, Mayfield Heights, OH 44124 (US); Robinson, Julie A., Mayfield Heights, OH 44124 (US); Haensgen, Michael D., Mayfield Heights, OH 44124 (US)
(74) Representative: Grünecker Patent- und Rechtsanwälte PartG mbB

(57) **Abstract**

Described herein are methods and systems for providing a suite assistant associated with a suite of industrial automation software applications. The suite assistant receives queries from a user via an interface that requests assistance with some aspect of industrial automation system design, management, evaluation, diagnostics, and the like. The suite assistant processes the query, identifies an industrial automation software application that is most beneficial with respect to the query and identifies one or more selections for configurable elements of the software application. The suite assistant then deploys an instance of the industrial automation software application, prepopulates the industrial automation software application with the selections and configurations, and provides the preconfigured industrial automation software application to the user via the interface in response to the query.

## Description

### BACKGROUND

Industrial automation systems play a critical role in modern manufacturing, process control, and large-scale production environments. These systems integrate various hardware, software, sensor, controller, actuator, and other components to monitor and automate complex industrial processes, improving efficiency, precision, and reliability. Effectively implementing and maintaining an industrial automation system and its numerous elements can be a significant challenge, particularly for systems of increased complexity that leverage a large number of industrial devices and automation processes.

Many tools and software applications (e.g., design tools, management tools, diagnostic tools, etc.) have been introduced over time to ease the difficulties associated with implementing and maintaining an industrial automation system. Unfortunately, as the complexity of industrial automation systems grows, so does the complexity of the many tools intended to enhance the implementation and maintenance of those systems. As a result, selecting the best tool to utilize for a user's purposes and initializing the many configurable elements of that tool represents a challenge of its own.

Selecting the best software application and configurations to assist in an industrial automation tasks (i.e., design, management, diagnostics, etc.) relies on a user having a sufficient understanding of the task, a sufficient understanding of the specific utility of available software applications, and a sufficient understanding of how the various configurations of the available software applications effects the user's experience when utilizing one of the software applications. In many cases, a high level of skill and experience are used to inform selecting a software application.

However, even where a user has a high level of skill and experience, selecting a software application and configuring the software application still represents a drain on time and other resources. Further, for users lacking a high level of skill and experience, this drain on resources can increase substantially and even potentially outweigh the benefit of using the software application in the first place. As such, improved techniques are needed for streamlining the selection and configuration of software applications in industrial automation environments.

### SUMMARY

Described herein are methods and systems for providing a suite assistant associated with a suite of industrial automation software applications. The suite assistant receives queries from a user via an interface that requests assistance with some aspect of industrial automation system design, management, evaluation, diagnostics, and the like. The suite assistant processes the query, identifies an industrial automation software application that is most beneficial with respect to the query and identifies one or more selections for configurable elements of the software application. The suite assistant then deploys an instance of the industrial automation software application, prepopulates the industrial automation software application with the selections and configurations, and provides the preconfigured industrial automation software application to the user via the interface in response to the query.

The techniques herein, in particular, provide for a computer-implemented method including receiving a query at a suite assistant via a chat interface, wherein the suite assistant is associated with a suite of software applications for industrial automation processes, and wherein the query is received from a user associated with a user account. The method further includes processing the query to facilitate a response, wherein the processing includes identifying a particular software application of the suite of software applications and identifying one or more selections of configurable elements of the particular software application. The method further includes providing the response, which includes launching an instance of the particular software application seeded with the one or more selections.

In some scenarios, the suite assistant comprises a generative artificial intelligence model. In some scenarios, processing the query further includes generating a prompt for submission to a generative artificial intelligence model. In some scenarios, the method further includes maintaining, by the suite assistant, user account information associated with each user account, wherein the user account information comprises one or more of a role of the user, historical activity of the user, an enterprise of the user, active licenses of the suite of software applications of the user, and a skill level of the user.

In some scenarios, the method further includes inferring the skill level of the user based at least in part on user interactions with the suite assistant, the user interactions including at least the query and the historical activity of the user. In some scenarios, the method further includes identifying the particular software application further includes identifying the particular software application based at least in part on the user account information and identifying one or more selections further includes identifying one or more selections based at least in part on the user account information.

In some scenarios, launching the instance of the particular software application further includes obscuring, based on at least the user account, one or more viewable elements of a user interface associated with the particular software application and providing the user interface to the user. In some scenarios, the method further includes receiving an interface request from the user via the chat interface and based on the interface request, performing by the suite assistant one or more of modifying a selection of the one or more selections and revealing one or more of the one or more viewable elements.

In some scenarios, the suite of software applications comprises at least one of a customer portal application, a development environment application, an industrial process design application, a data management application, and a data analytics application. In some scenarios, the one or more of the suite of software applications are cloud-based applications and launching the instance of the particular software application includes launching the instance of the particular software application in a web application environment.

### BRIEF DESCRIPTION OF THE DRAWINGS

Many aspects of the disclosure can be better understood with reference to the following drawings. The components in the drawings are not necessarily drawn to scale. Moreover, in the drawings, like reference numerals designate corresponding parts throughout the several views. While several embodiments are described in connection with these drawings, the disclosure is not limited to the embodiments disclosed herein. On the contrary, the intent is to cover all alternatives, modifications, and equivalents.
Figure 1 illustrates an operational environment in accordance with some embodiments of the present technology.
Figure 2 illustrates a method in accordance with some embodiments of the present technology.
Figure 3 illustrates a suite assistant in detail in accordance with some embodiments of the present technology.
Figure 4 illustrates a further method in accordance with some embodiments of the present technology.
Figure 5 illustrates an operational sequence in accordance with some embodiments of the present technology.
Figure 6A illustrates an operational scenario in accordance with some embodiments of the present technology.
Figure 6B illustrates a further operational scenario in accordance with some embodiments of the present technology.
Figure 6C illustrates a further operational scenario in accordance with some embodiments of the present technology.
Figure 6D illustrates a further operational scenario in accordance with some embodiments of the present technology.
Figure 7 illustrates an application interface in accordance with some embodiments of the present technology.
Figure 8 illustrates a computing device used in some embodiments of the present technology.

### DETAILED DESCRIPTION

Described herein are methods and systems for providing a suite assistant associated with a suite of industrial automation software applications. The suite assistant receives queries from a user via an interface that requests assistance with some aspect of industrial automation system design, management, evaluation, diagnostics, and the like. The suite assistant processes the query, identifies an industrial automation software application that is most beneficial with respect to the query and identifies one or more selections for configurable elements of the software application. The suite assistant then deploys an instance of the industrial automation software application, prepopulates the industrial automation software application with the selections and configurations, and provides the preconfigured industrial automation software application to the user via the interface in response to the query.

In some embodiments, the suite assistant includes a generative artificial intelligence model. In some such embodiments, the suite assistant generates and submits a prompt to the generative artificial intelligence in order to facilitate responding to the query of the user. The generative artificial intelligence responds to the prompt with an application and configurations that the suite assistant then deploys and preconfigures for the user. In some embodiments, the suite assistant maintains contextual information about a user that can be used to inform the identification of a software application and selections of configurable elements. In some embodiments, the software application provided to the user is modified such that one or more of the elements of the software application are visually obscured. The suite assistant determines where an element of the software application should be visually obscured based on the query. Elements of the software application that are not relevant to the query can be visually obscured or hidden from the user to streamline the user's ability to engage with the software application in order to carry out industrial automation design, management, evaluation, diagnostics, and the like.

In some embodiments, the query represents a single instruction or request submitted by the user to the suite assistant. In other embodiments, the query may represent multiple instructions or requests submitted by the user. In some embodiments, the query may represent an ongoing interaction between the user and the suite assistant and may include a back-and-forth dialogue between the user and the suite assistant. In such embodiments, the suite assistant includes a chatbot to facilitate a back-and-forth dialogue between the user and the suite assistant. Additionally, the suite assistant may include a chatbot in other embodiments.

The methods and systems described herein provide for a number of beneficial technical effects. In particular, the techniques herein provide for a suite assistant that facilitates streamlined use of a suite of software applications to assist in various industrial automation system tasks, such as industrial automation system design, industrial automation system management, industrial automation system diagnostics, and the like. The automatic provision of software applications preconfigured with selections for configurable items enhances a user's ability to efficiently utilize the software applications to assist with industrial automation tasks. Additionally, the ability to submit queries to a suite assistant in a natural language format simplifies interactions with the suite assistant, further improving the user's ability to query the suite assistant and receive a preconfigured or prepopulated software application in response. Additionally, the automatic provision of a preconfigured or prepopulated software application in response to the user's query is improved through the suite assistant's maintaining of contextual information for the user. The contextual information, which can be gathered over time and used to make direct and inferential determinations about the user and how the user's query should be responded to.

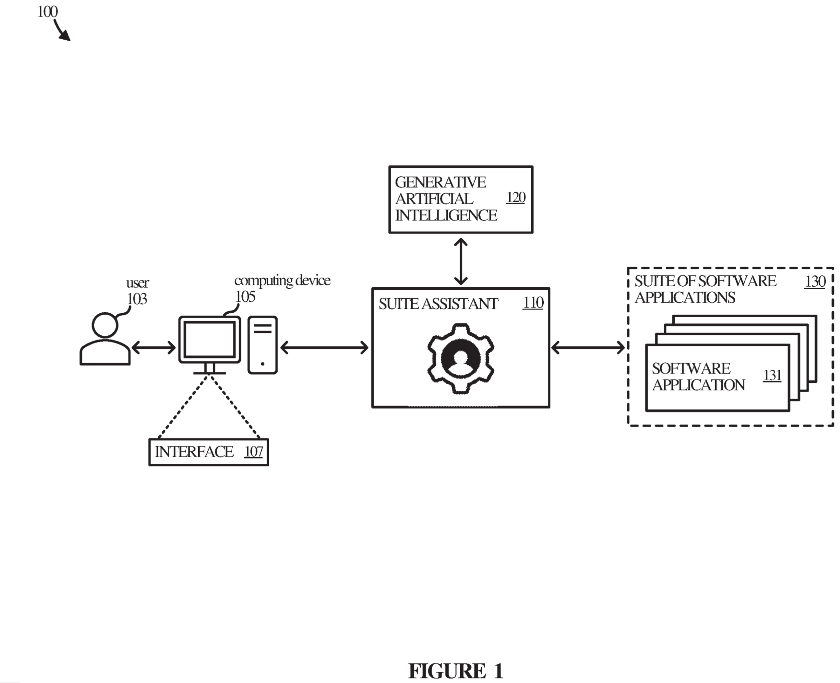

**Figure** 1 illustrates operational environment 100 in accordance with some embodiments of the present technology. Operational environment 100 includes user 103, computing device 105, suite assistant 110, generative artificial intelligence 120, hereinafter referred to as GAI 120, and suite of software applications 130. Computing device 105 further includes interface 107. Suite of software applications 130 further includes software application 131.

Operational environment 100 is generally representative of an environment in which industrial automation processes are carried out. Operational environment 100 may be an industrial environment, a manufacturing environment, a chemical processing environment, a commercial sorting and distribution environment, or an energy production environment, or any other environment in which industrial automation processes are used. For example, operational environment 100 may be a malted beverage production facility that leverages a number of industrial automation processes (e.g., brewing control processes, material handling processes, filtration processes, quality evaluation processes, canning or bottling processes, inventory management processes, and the like).

User 103 is generally representative of a user, administrator, technician, and the like for which streamlined interaction with suite of software applications 130 is beneficial. For example, user 103 may be a designer of an industrial automation system, a technician maintaining an industrial automation system, an administrator evaluating the performance of an industrial automation system, or any other party that interacts with operational environment 100. In some cases, user 103 may represent an application or program. In such scenarios, user 103 may be an application that designs industrial automation systems, an application that maintains an industrial automation system, or an application that evaluates the performance of an industrial automation system, for example. User 103 submits a query to suite assistant 110 in order to request assistance in some industrial automation task. The task may include industrial automation system design, industrial automation system management, industrial automation system diagnostics, and the like.

In some embodiments, the query represents a single instruction or request submitted by user 103 to suite assistant 110. In other embodiments, the query may represent multiple instructions or requests submitted by a user. In some embodiments, the query may represent an ongoing interaction between user 103 and suite assistant 110 and may include a back-and-forth dialogue between user 103 and suite assistant 110. In such embodiments, suite assistant 110 includes a chatbot to facilitate a back-and-forth dialogue between user 103 and suite assistant 110. Additionally, suite assistant 110 may include a chatbot in other embodiments.

In some embodiments, user 103 is associated with a user account. In some embodiments, suite assistant 110 maintains contextual information for user 103 via the associated user account. In such embodiments, the contextual information for user 103 can be used to inform the identification of the software application (e.g., software application 131) and the identification of the one or more selections of configurable elements for the software application. The contextual information that suite assistant 110 maintains for user 103 may include a role of user 103, an enterprise associated with user 103, historical activity of user 103, a skill level of user 103, or any other type of contextual information. The role of user 103 may be, for example, an administrative role, a technician role, a buyer role, and the like. Historical activity of user 103 may include previous queries, previous requests to modify an interface, or any other previous actions of user 103 relating to engaging with suite assistant 110. In some embodiments, a skill level of user 103 is inferred from other contextual information for user 103. For example, suite assistant 110 may infer that user 103 has a high level of technical skill based on the role of user 103 and the historical actions of user 103 that demonstrate such a high level of skill.

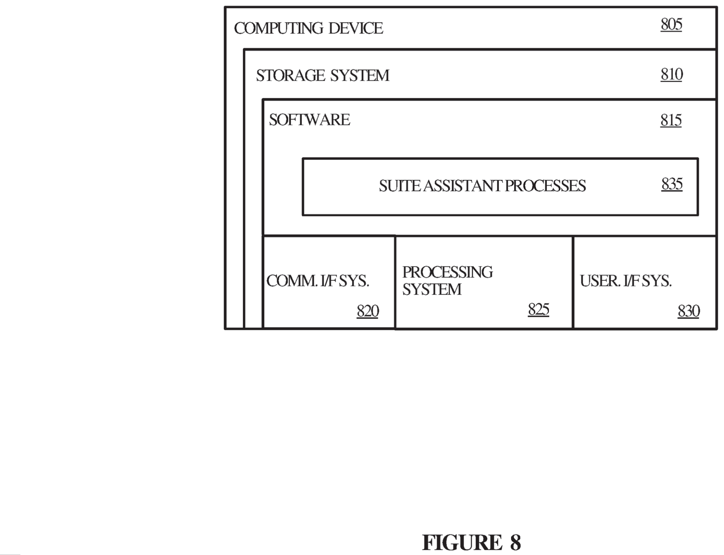

Computing device 105 is generally representative of a computing device sufficient to provide interface 107 to user 103. Computing device 105 may be implemented via physical computing hardware or may be implemented by virtual computing resources. An example of such a computing device is given by computing system 805 of Figure 8 and is described in further detail in the text associated with Figure 8. As shown in operational environment 100, user 103 interacts with computing device 105 to submit inputs to, and receive outputs from, interface 107. Computing device 105 may host various applications. For example, computing device 105 may host suite assistant 110 and suite of software applications 130. In some scenarios, suite assistant 110 and suite of software applications 130 may be cloud-based. In such cases, computing device 105 may interact with suite assistant 110 and suite of software applications 130 via a network connection.

Interface 107 is generally representative of a user interface with which user 103 interacts. Interface 107 includes a number of interactable elements that user 103 may select, configure, deselect, or any other manner of engagement. Interface 107 may be a graphical user interface. An example of such a user interface is given by user interface system 830 of Figure 8 and is described in further detail in the text associated with Figure 8. In some embodiments, interface 107 is used by suite assistant 110 as an environment in which to provide a chatbot feature of suite assistant 110 and in which to launch an instance of any one or more of suite of software applications 130. In such embodiments, user 103 submits inputs to interface 107 that are processed by suite assistant 110. In some such embodiments, user 103 submits inputs to interface 107 in a natural language format.

Suite assistant 110 is representative of software, hardware, or firmware for assisting user 103 in selecting and configurating one or more of suite of software applications 130. Suite assistant 110 may be locally hosted by computing device 105, locally hosted by a different computing device, or may be a remotely hosted cloud-based program. Suite assistant 110 is configured to receive queries from user 103 via interface 107 of computing device 105. Suite assistant 110 receives the query from user 103 and processes the query to facilitate a response. Suite assistant 110 is associated with a suite of software applications (suite of software applications 130) and launches an instance of one of suite of software applications 130 in response to queries from user 103.

To process the query, suite assistant 110 interprets the query and first identifies a particular software application (e.g., software application 131). The particular software application is identified based on the query. For example, user 103 may submit a query asking for assistance designing a bottling line for a malted beverage production facility and software application 131 may be a design tool. In such an example, suite assistant 110 may identify software application 131 as the best (i.e., most relevant) tool with regard to the query submitted by user 103.

To continue processing the query, suite assistant 110 is further configured to identify selections for one or more configurable elements of the particular software application that suite assistant 110 previously identified. Depending on the application in question, the configurable elements for which suite assistant 110 identifies one or more selections may include automation task configurations, device selections, access control settings, device behavior settings, communication protocols, network settings, process parameters, device calibration, data sampling rates, safety settings, interlock logic, visualization settings, energy use parameters, API configurations, test scenario settings, maintenance thresholds, process tolerances, and any other configurable element associated with suite of software applications 130.

In some embodiments, suite assistant 110 obscures, greys out, disables, or hides one or more interface elements when presenting software application 131 to user 103 via interface 107. To obscure, grey out, disable, or hide the interface elements, suite assistant 110 may darken the interface element or may use some other technique to visually distinguish the interface elements that are not relevant to the query from those interface elements that are relevant to the query.

Continuing the preceding example, user 103 submits a query asking for assistance designing a bottling line for a malted beverage production facility, and in response, suite assistant 110 identifies software application 131. Having identified software application 131, suite assistant then identifies selections for one or more configurable elements of software application 131. In the current example, suite assistant 110 may identify a selection of "bottling line" for a configurable element relating to the automation task being designed for. Suite assistant 110 may also prepopulate search results for automation devices relevant to the query, such as bottling and conveyance devices.

In some embodiments, suite assistant 110 further includes a chatbot configured to receive the query from user 103. The chatbot may be implemented via a machine learning model. In some scenarios, the chatbot may be configured to prompt user 103 for a query. In some scenarios, the chatbot is implemented via a machine learning model is configured to receive a query in a natural language format.

In some embodiments, suite assistant 110 leverages a generative artificial intelligence model (e.g., GAI 120) in order to perform one or more of interpreting the query, identifying the software application, and identifying selections for one or more configurable elements of the software application. In such embodiments, suite assistant 110 is further configured to generate a prompt for submission to GAI 120 that causes GAI 120 to respond with an identified software application and identified selections for one or more configurable elements of the identified software application.

In some embodiments, suite assistant 110 includes a further machine learning model that can be used to interpret the query, and in some cases, provide additional contextual information to the interpreted query that can be used in the identification of a software application and configurations. In such cases, the interpreted query and, where applicable, the additional contextual information can be submitted to the generative artificial intelligence model.

GAI 120 is generally representative of a generative artificial intelligence model configured to receive an input and to provide a selection of a software application and selections for one or more configurable elements of the software application. In some embodiments, GAI 120 is configured to receive the query and to return the selections. In some embodiments, GAI 120 receives a processed version of the query that suite assistant 110 has parsed. GAI models (also known as foundation models) are models trained to generate new data based on a training dataset. GAI models as used herein include large-scale generative artificial intelligence (AI) models trained on massive quantities of diverse, unlabeled data. The GAI models learn using self-supervised, semi-supervised, or unsupervised techniques. GAI models perform many downstream tasks based on capturing general knowledge, semantic representations, and patterns and regularities in the training data. In some embodiments, such as embodiments included herein, a GAI model may be fine-tuned for specific downstream tasks. GAI models include BERT (Bidirectional Encoder Representations from Transformers) and ResNet (Residual Neural Network). GAI models may be based on any relevant architecture, including, for example, generative adversarial networks (GANs), variational auto-encoders (VAEs), and transformer models, including multimodal transformer models. Depending on the type of input accepted and output provided, GAI models may be multimodal or unimodal.

Multimodal models are a class of GAI model that accepts multimodal data including text, image, video, and audio data. Multimodal models may leverage techniques like attention mechanisms and shared encoders to fuse information from different modalities and create joint representations. Learning joint representations across different modalities enables multimodal models to generate multimodal outputs that are coherent, diverse, expressive, and contextually rich. For example, multimodal models can generate a caption or textual description of a given image by extracting visual features using an image encoder, then feeding the visual features to a language decoder to generate a descriptive caption. Similarly, multimodal models can generate an image based on a text description (or, in some scenarios, a spoken description transcribed by a speech-to-text engine). Multimodal models work in a similar fashion with video-generating a text description of the video or generating video based on a text description.

Multimodal models include visual-language foundation models, such as CLIP (Contrastive Language-Image Pre-training), ALIGN (A Large-scale ImaGe and Noisy-text embedding), and ViLBERT (Visual-and-Language BERT), for computer vision tasks. Examples of visual multimodal or foundation models include DALL-E, DALL-E 2, Flamingo, Florence, and NOOR. Types of multimodal models may be broadly classified as or include cross-modal models, multimodal fusion models, and audio-visual models, depending on the particular characteristics or usage of the model.

Large language models (LLMs) are a type of GAI model that process and generate natural language text. These models are trained on massive amounts of textual data. LLMs learn to generate relevant responses given a prompt or input text. The responses are coherent and contextually relevant to the given prompt. LLMs understand and generate sophisticated language based on their training. LLMs capture intricate patterns, semantics, and contextual dependencies in textual data. In some cases, LLMs may be used in multimodel models. For example, the LLM intelligence is used to combine images and audio input with textual input to generate multimodal output. Types of LLMs include language generation models, language understanding models, and transformer models.

Transformer models, including transformer-type foundation models and transformer-type LLMs, are a class of deep learning models used in natural language processing (NLP). Transformer models are based on a neural network architecture which uses self-attention mechanisms to process input data and capture contextual relationships between words in a sentence or text passage. Transformer models weigh the importance of different words in a sequence, allowing them to capture long-range dependencies and relationships between words. GPT (Generative Pre-trained Transformer) models, BERT (Bidirectional Encoder Representations from Transformer) models, ERNIE (Enhanced Representation through kNowledge IntEgration) models, T5 (Text-to-Text Transfer Transformer), and XLNet models are types of transformer models which have been pretrained on large amounts of text data using a self-supervised learning technique called masked language modeling. For example, large language models, such as ChatGPT and its brethren, have been pretrained on an immense amount of data across virtually every domain of the arts and sciences. This pretraining allows the models to learn a rich representation of language that can be fine-tuned for specific NLP tasks, such as text generation, language translation, or sentiment analysis. Moreover, these models have demonstrated emergent capabilities in generating responses that are creative, openended, and unpredictable.

Suite of software applications 130 is generally representative of a number of software applications that each assist in one or more aspects of the design, evaluation, diagnostics, or remediation of industrial automation systems. An example of such a software application is given by software application 131. Suite of software applications 130 may include industrial automation design applications, industrial automation management applications, industrial automation evaluation applications, industrial automation diagnostic applications, industrial automation remediation applications, or any combination of any number thereof. Suite assistant 110 is configured to identify, configure, and launch one or more of suite of software applications 130. In some embodiments, suite assistant 110 may identify, configure, and launch a first application of suite of software applications 130. The result of the interaction between user 103 and the launched first application can subsequently be used to inform the identification, configuration, and launching of a second software application of suite of software applications 130. Examples of software applications that may be contained in suite of software applications 130 include FACTORY TALK DESIGN STUDIO^{®} offered by ROCKWELL AUTOMATION^{®}, FACTORY TALK^{®} OPTIX offered by ROCKWELL AUTOMATION^{®}, FACTORY TALK^{®} ANALYTICS offered by ROCKWELL AUTOMATION^{®}, and PLEX PRODUCTION MONITORING offered by ROCKWELL AUTOMATION^{®}.

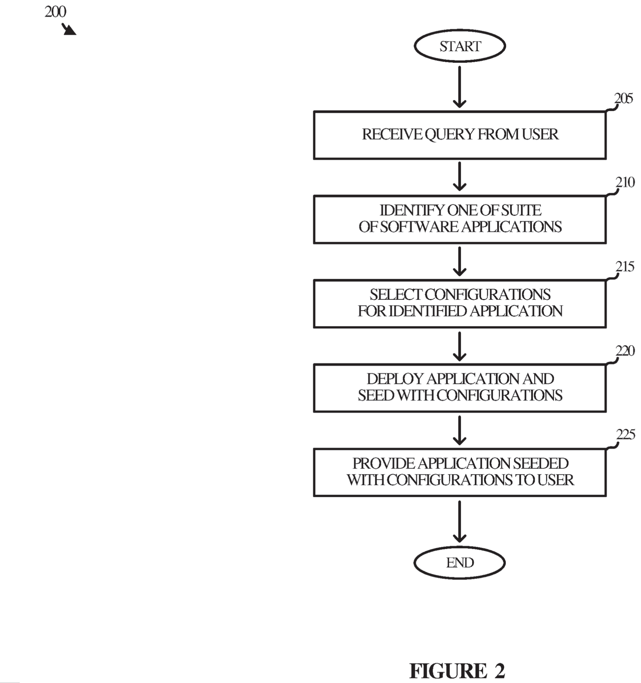

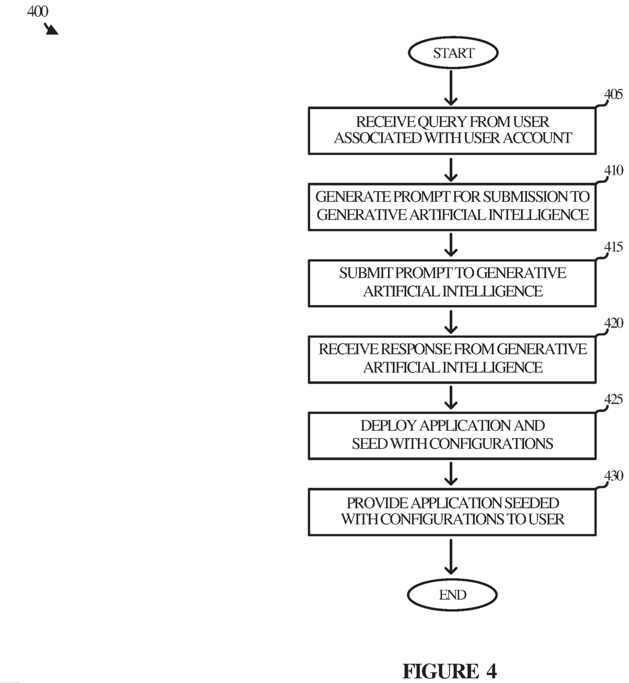

**Figure 2** illustrates method 200 in accordance with an embodiment. Method 200 is representative of an example of suite assistant processes (e.g., suite assistant processes 835 of Figure 8) and may be implemented in program instructions in the context of the software and/or firmware elements of suite assistant 110 of Figure 1. The program instructions, when executed by one or more processing devices of one or more computing systems (e.g., computing device 805 in Figure 8), direct the one or more computing systems to operate as follows, referring parenthetically to the steps in Figure 2, and in the singular to a computing device for the sake of clarity. Another example of a suite assistant process in other embodiments as disclosed herein is described in Figure 4.

To begin, a user (e.g., user 103 of Figure 1) enters a query to an interface (e.g., interface 107 of Figure 1) of a computing device (e.g., computing device 105 of Figure 1). A suite assistant (e.g., suite assistant 110 of Figure 1) receives the query and processes the query in order to provide a response (step 205). The query may be a request for design assistance, a request for diagnostic assistance, a request for evaluation assistance, and the like. The suite assistant processes the query in order to provide the user with a launched instance of a software application (e.g., software application 131 of Figure 1) of a suite of software applications (e.g., suite of software applications 130 of Figure 1) that are relevant to the query. The suite assistant is further configured to identify selections of one or more configurable elements of the identified application and to seed the identified application with the configuration such that the launched instance of the application is prepopulated with the one or more selections.

To process the query, the suite assistant first identifies a software application of the suite of software applications that is most relevant to the query of the user (step 210). For instance, where the query represents a request for diagnostic assistance, the suite assistant identifies a software application that is most relevant to industrial automation system diagnostics. To continue processing the query, the suite assistant then identifies one or more selections for configurable elements of the identified software application that best configure the identified software application for responding to the query (step 215). For instance, where the query represents a request for diagnostic assistance for a particular device, the suite assistant identifies selections of configurable elements in the identified software application that configure the identified software application for providing diagnostic assistance specific to the particular device mentioned in the query.

Having identified both the software application of the suite of software applications and the one or more selections of configurable elements of the software application, the suite assistant deploys the application and seeds the application with the one or more selections of configurable elements (step 220). In other words, the suite assistant instantiates the identified software application and configures certain elements of the software application without yet providing the software application to the user. Once the software application is deployed and seeded, the seeded software application is made available to the user (step 225). The seeded software application is made available to the user through the interface of the computing device that initially received the query. In some cases, the seeded software application may be made available on a different computing device. Where the seeded software application is an application that is locally hosted on the computing device, the suite assistant can launch and subsequently seed the software application locally on the computing device. Where the seeded software application is cloud-based, the suite assistant may launch and subsequently seed the software application in a browser-based web environment.

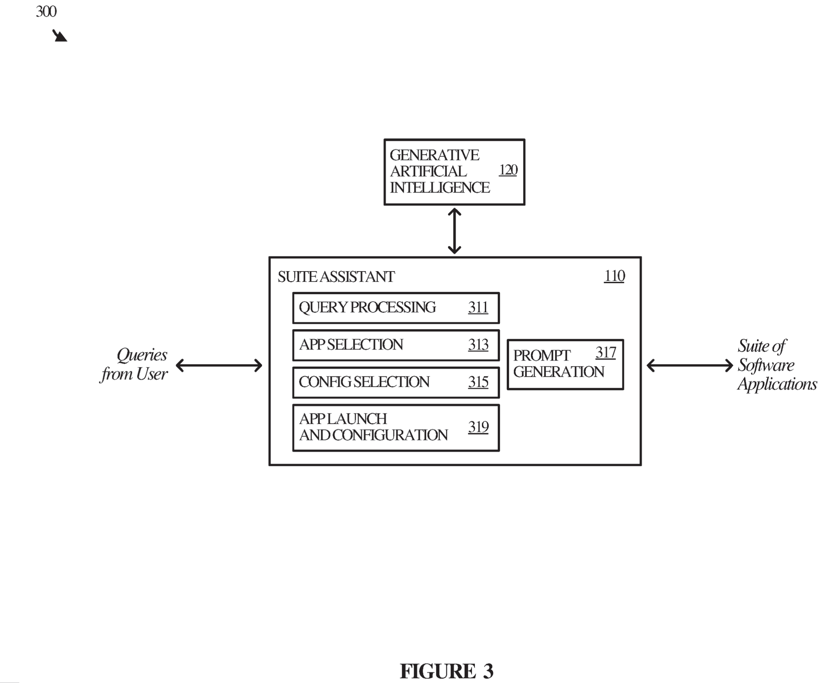

**Figure 3** illustrates suite assistant in detail 300. Suite assistant in detail 300 includes suite assistant 110 and GAI 120. Suite assistant 110 of Figure 3 and GAI of Figure 3 are each substantively the same as suite assistant 110 of Figure 1 and GAI 120 of Figure 1, respectively, and are described in detail in the text associated with Figure 1. Suite assistant 110, as illustrated in suite assistant in detail 300, includes additional elements that may be present in other embodiments but have been omitted for clarity. In Figure 3, suite assistant 110 includes query processing 311, application selection 313, configuration selection 315, prompt generation 317, and application launch and configuration 319.

Query processing 311 is generally representative of hardware, software, or firmware for receiving and processing a query received from a user such as user 103 of Figure 1. Query processing 311 may be a sub-element of suite assistant 110 or may be implemented independently from suite assistant 110. In some scenarios, query processing 311 is executable instructions that, when executed by suite assistant 110, direct suite assistant 110 to provide query processing.

In some embodiments, query processing 311 receives a query from a user (e.g., user 103) that is submitted in a natural language format. In some such embodiments, query processing 311 translates the query from a natural language format and provides the translated query to application selection 313 for further processing. In some such embodiments, query processing 311 translates the query from a natural language format and provides the translated query to prompt generation 317 to facilitate generating a prompt for submission to a generative artificial intelligence model (e.g., GAI 120 of Figure 1). In some other embodiments, query processing 311 receives the query and provides the query to prompt generation 317 without having translated the query from a natural language format.

Application selection 313 is generally representative of hardware, software, or firmware for identifying a software application in response to a query received from a user, such as user 103 of Figure 1. Application selection 313 may be a sub-element of suite assistant 110 or may be implemented independently from suite assistant 110. In some scenarios, application selection 313 is executable instructions that, when executed by suite assistant 110, direct suite assistant 110 to provide application identification.

In some embodiments, application selection 313 receives a translation of a natural language format query from query processing 311 and identifies a software application based on the translation. In some embodiments, application selection 313 receives an output from GAI 120 that indicates a software application, in response to which application selection 313 identifies the software application. In such embodiments, application selection 313 then provides the identified software application to application launch and configuration 319. In some embodiments, GAI 120 directly provides the indication of the software application to application launch and configuration 319.

Configuration selection 315 is generally representative of hardware, software, or firmware for configuring a software application that was identified in response to a query received from a user. Configuration selection 315 may be a sub-element of suite assistant 110 or may be implemented independently from suite assistant 110. In some scenarios, configuration selection 315 is executable instructions that, when executed by suite assistant 110, direct suite assistant 110 to provide application identification. In some embodiments, configuration selection 315 receives a translation of a natural language format query from query processing 311 and an indication of the identified software application from application selection 313. In such scenarios, configuration selection 315 identifies one or more selections of configurable elements of the identified software application based on the query and the identified software application.

Prompt generation 317 is generally representative of hardware, software, or firmware for generating a prompt to be submitted to a generative artificial intelligence model (e.g., GAI 120) based on a query received from a user. Prompt generation 317 may be a sub-element of suite assistant 110 or may be implemented independently from suite assistant 110. In some scenarios, prompt generation 317 is executable instructions that, when executed by suite assistant 110, direct suite assistant 110 to provide prompt generation. In some embodiments, prompt generation 317 includes a machine learning model configured to receive a query and to respond with a prompt for submission to the generative artificial intelligence model based on the query. In some embodiments, prompt generation 317 includes a machine learning model configured to receive a natural language query and to respond with a prompt for submission to the generative artificial intelligence model based on the query. In some embodiments, prompt generation 317 includes a machine learning model configured to receive a translated natural language query and to respond with a prompt for submission to the generative artificial intelligence model based on the query. A prompt provided by prompt generation 317 includes at least the query received from the user (e.g., user 103 of Figure 1) and in some embodiments further includes contextual information for the user that is maintained by suite assistant 110. The contextual information may include a role of the user, an enterprise associated with the user, a skill level of the user, historical activity of the user, or a combination thereof.

Application launch and configuration 319 is generally representative of hardware, software, or firmware for launching and configuring a software application. Application launch and configuration 319 may be a sub-element of suite assistant 110 or may be implemented independently from suite assistant 110. In some scenarios, application launch and configuration 319 is executable instructions that, when executed by suite assistant 110, direct suite assistant 110 to provide application launching and configuration. In some embodiments, application launch and configuration 319 receives an identified software application from application selection 313 and an identified one or more selections of configurable elements of the identified software application from configuration selection 315. In some other embodiments, application launch and configuration 319 receives both an identified software application and an identified one or more selections of configurable elements of the identified software application from GAI 120.

In either case, based on the inputs received, application launch and configuration 319 launches an instance of the identified software application. The instance of the identified software application is not yet provided to the user. Application launch and configuration 319 preconfigures the identified software application with the one or more selections of configurable elements (i.e., seeds the identified software application). Application launch and configuration 319 then provides the seeded software application to the user via the interface.

**Figure** 4 illustrates further method 400 in accordance with an embodiment. Further method 400 is representative of a further example of suite assistant processes (e.g., suite assistant processes 835 of Figure 8) and may be implemented in program instructions in the context of the software and/or firmware elements of suite assistant 110 of Figure 3. The program instructions, when executed by one or more processing devices of one or more computing systems (e.g., computing device 805 in Figure 8), direct the one or more computing systems to operate as follows, referring parenthetically to the steps in Figure 2, and in the singular to a computing device for the sake of clarity.

To begin, a user (e.g., user 103 of Figure 1) enters a query to an interface (e.g., interface 107 of Figure 1) of a computing device (e.g., computing device 105 of Figure 1). A suite assistant (e.g., suite assistant 110 of Figure 1) receives the query and processes the query in order to provide a response (step 405). In some cases, the user submitting the query is associated with a user account. The user account associated with the query may provide additional contextual information that can be used to inform the response of the suite assistant.

The query may be a request for design assistance, a request for diagnostic assistance, a request for evaluation assistance, and the like. The suite assistant processes the query in order to provide the user with a launched instance of a software application (e.g., software application 131 of Figure 1) of a suite of software applications (e.g., suite of software applications 130 of Figure 1) that are relevant to the query. The suite assistant is further configured to identify selections of one or more configurable elements of the identified application and to seed the identified application with the configuration such that the launched instance of the application is prepopulated with the one or more selections.

To process the query, the suite assistant generates a prompt for submission to a generative artificial intelligence model, such as GAI 120 of Figure 1 (step 410). The prompt may include one or more of the query, a translation of the query, a user account, a role of the user, a skill of the user, a historical behavior of the user, and other such pieces of contextual information. Once generated, the prompt is submitted to the generative artificial intelligence model (step 415). In response, the generative artificial intelligence model provides the suite assistant with a software application of a suite of software applications (e.g., software application 131 of suite of software applications 130, each of Figure 1) and one or more selections of configurable elements of the software application. Based on the prompt and the information included therein, the generative artificial intelligence model returns an output that includes a software application and one or more selections of configurable elements for the software application (step 420).

Having identified both the software application of the suite of software applications and the one or more selections of configurable elements of the software application, the suite assistant deploys the application and seeds the application with the one or more selections of configurable elements (step 425). In other words, the suite assistant instantiates the identified software application and configures certain elements of the software application without yet providing the software application to the user.

Once the software application is deployed and seeded, the seeded software application is made available to the user (step 430). The seeded software application is made available to the user through the interface of the computing device that initially received the query. In some cases, the seeded software application may be made available on a different computing device. Where the seeded software application is an application that is locally hosted on the computing device, the suite assistant can launch and subsequently seed the software application locally on the computing device. Where the seeded software application is cloud-based, the suite assistant may launch and subsequently seed the software application in a browser-based web environment.

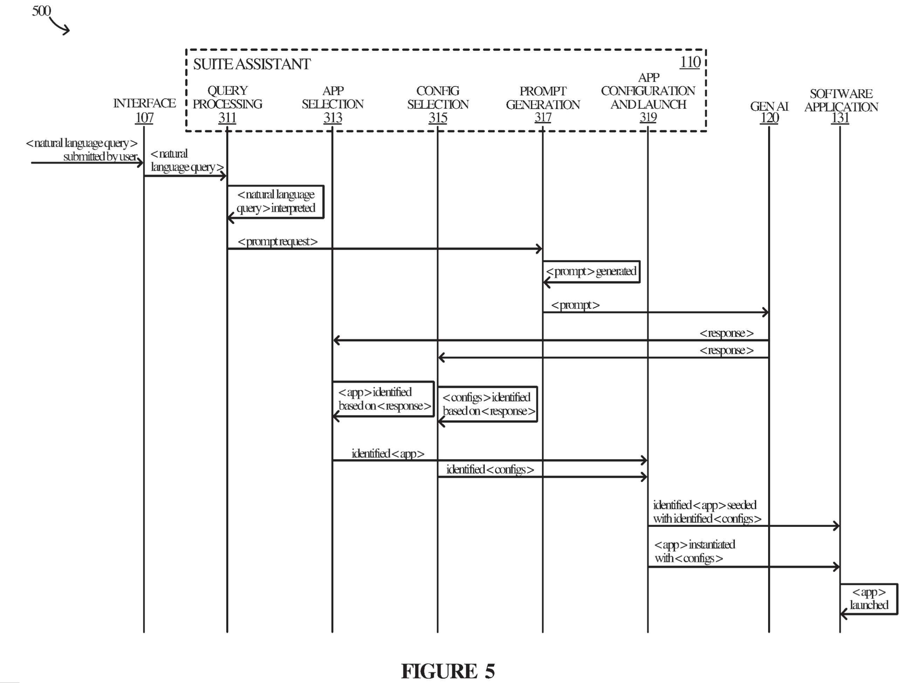

**Figure 5** illustrates operational sequence 500 in accordance with an embodiment. Operational sequence 500 includes interface 107 of Figure 1, suite assistant 110 of Figure 3, generative artificial intelligence 120 of Figure 1, and software application 131 of Figure 1. Suite assistant 110 of Figure 3 further includes query processing 311, application selection 313, configuration selection 315, prompt generation 317, and application launch and configuration 319, each of Figure 3, respectively. Each of the elements of operational sequence 500 are described in detail in the preceding paragraphs. In particular, the elements of operational sequence 500 are described in the text associated with Figure 1 and Figure 3. Further, operational sequence 500 may be considered with regard to method 200 of Figure 2 and further method 400 of Figure 4.

To begin, a user 103 enters a query to interface 107. Suite assistant 110 receives the query at query processing 311 and processes the query in order to provide a response. In some cases, the user submitting the query is associated with a user account. The user account associated with the query may provide additional contextual information that can be used to inform the response of the suite assistant.

The query is processed at query processing 311. As shown in Figure 5, the query received from user 103 is received in a natural language format. The natural language format query is processed by query processing 311, which translates the natural language query. Query processing 311 then requests a prompt from prompt generation 317 including the interpreted natural language query. Prompt generation 317, having received the prompt request from query processing 311, generates a prompt for submission to a generative artificial intelligence model to facilitate the response to user 103. In some cases, prompt generation 317 further includes contextual information for user 103 in the prompt. Prompt generation 317 then submits the generated prompt to GAI 120. GAI 120 generates a response and provides the response to suite assistant 110. As shown in Figure 5, GAI 120 provides a response to both application selection 313 and to configuration selection 315, though in some embodiments, GAI 120 provides a response directly to application launch and configuration 319.

As shown in Figure 5, once provided with a response from GAI 120, application selection 313 identifies a software application based on the response and configuration selection 315 identifies one or more selections of configurable elements for the software application. Application selection 313 provides the identified software application to application launch and configuration 319, and configuration selection provides the one or more selections of configurable elements for the software application to application launch and configuration 319.

Application launch and configuration 319 then deploys an instance of the identified application and seeds the deployment with the one or more selections of configurable elements. Once the deployed instance of the software application is fully configured with the one or more selections of configurable elements, the deployed instance of the software application is provided to user 103 via an interface (e.g., interface 107 of Figure 1).

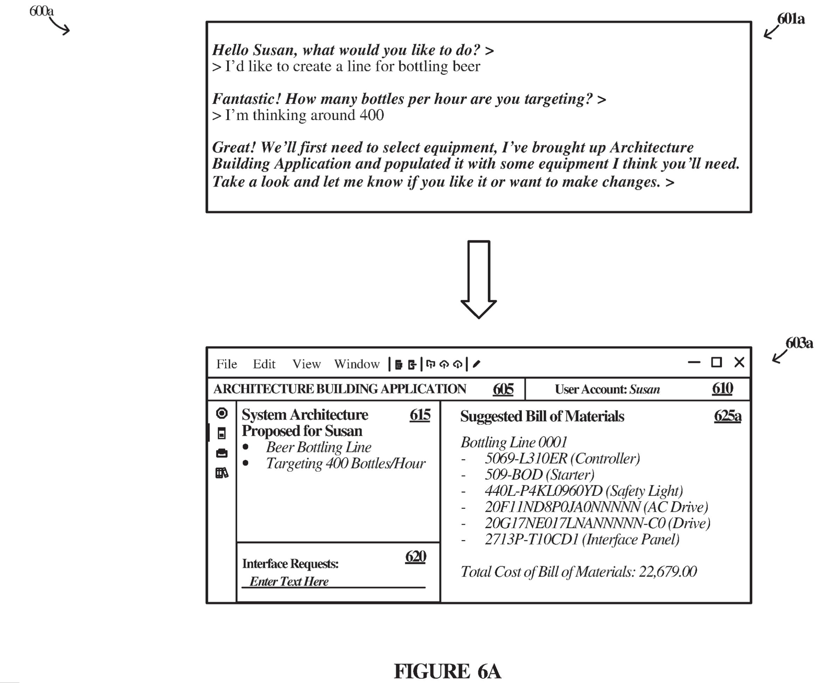

**Figure 6A** illustrates operational scenario 600a in accordance with some embodiments of the present technology. Operational scenario 600a may be considered with regard to the elements of Figure 1 and Figure 3, respectively. In particular, the elements and techniques described in operational scenario 600a may be implemented in the context of interface 107 of Figure 1. Operational scenario 600a includes chatbot instance 601a and application instance 603a. Application instance 603a further includes application name 605, user account 610, system architecture proposed for Susan 615, interface requests 620, and suggested bill of materials 625a.

Chatbot instance 601a is generally representative of an initial interaction between a user, such as user 103 of Figure 1, and a chatbot of a suite assistant, such as suite assistant 110. Chatbot instance 601a illustrates a natural language back and forth interaction between suite assistant 110 and user 103 that facilitates streamlined use of various applications by user 103. Chatbot instance 601a may be facilitated by an element of suite assistant 110, such as query processing 311 of Figure 3, or may otherwise be facilitated by a program external to suite assistant 110.

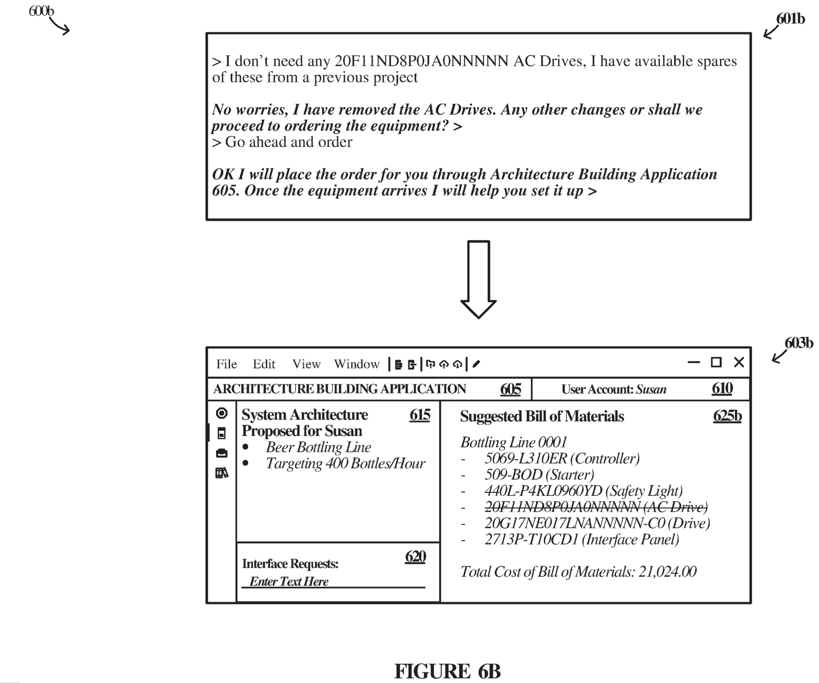

Application instance 603a is generally representative of an instance of an application launched with various selections of the configurable elements of the application. Application name 605 represents the name of the application launched in application instance 603a. In Figure 6A, application name 605 is "architecture building application" and represents an industrial automation system design application used to design industrial automation systems and environments. Since the user mentioned wanting to create a beer bottling line, suite assistant 110 determined a design application should be used and automatically launched the proper software application. Similar automatic software application launching is shown in Figures 6B - 6D as well. User account 610 is representative of a user credential associated with user 103. In some cases, the authority corresponding to the user credential may result in different applications, different selections of configurable elements, or a combination thereof for different users. System architecture proposed for Susan 615 is representative of a state of the architecture building application. The application state shown in application instance 603 shows that system architecture proposed for Susan 615 is being discussed, and that this system corresponds to a beer bottling line configured to produce four hundred bottles per hour of operation. Interface requests 620 is representative of a textual input element that allows a user such as user 103 to input various requests to suite assistant 110 regarding how the interface is presented, populated, or a combination thereof. Suggested bill of materials 625a is generally representative of a suggested bill of materials that corresponds to an input of user 103. Here, user 103 expressed a desire to create a beer bottling line with a certain production volume. As a result, the architecture building application is launched.

The interaction begins with the input "Hello Susan, what would you like to do?" entered by suite assistant 110 in order to survey user 103 about a current issue. To respond to the input of user 103, suite assistant 110 evaluates the inputs of chatbot instance 601 up to this point. Susan (i.e., user 103) has expressed a desire to create a bottling line. To provide the most effective assistance to Susan, suite assistant 110 determines that an estimate of the production volume corresponding to Susan's intended bottling line will be helpful in assisting Susan in designing such a bottling line. As a result, suite assistant 110 submits "Fantastic! How many bottles per hour are you targeting?" to chatbot instance 601a. Susan responds by inputting "I'm thinking around 400" to chatbot instance 601a.

Suite assistant 110, having obtained a sufficient amount of information from user 103 regarding the issue that user 103 would like assistance with, can then launch and configure an application based on that information. Here, Susan has expressed the desire to create a bottling line that produces approximately four hundred bottles per hour of operation. Based on this information, suite assistant 110 selects an application and selections for configurable elements of the application in order to assist Susan. In some cases, suite assistant 110 leverages a machine learning model, such as generative artificial intelligence 120 of Figure 1, in order to determine which application and which selections for configurable elements of the application are most responsive to the inputs of user 103.

In any case, suite assistant 110 determines that application instance 603a should include a launch of the architecture building application populated with suggested bill of materials 625a. As shown in Figure 6A, suggested bill of materials 625a includes elements that suite assistant 110 has determined are appropriate for the creation of a bottling line that produces four hundred bottles per hour of operation. Suggested bill of materials 625a shows a controller, a starter, a safety light, an AC drive, a drive, and an interface panel, though may include more or fewer elements in various scenarios. Suggested bill of materials 625a further illustrates a total cost for the items listed in suggested bill of materials 625a.

**Figure 6B** illustrates operational scenario 600b in accordance with some embodiments of the present technology. Operational scenario 600b may be considered with regard to the elements of Figure 1 and Figure 3, respectively. In particular, the elements and techniques described in operational scenario 600b may be implemented in the context of interface 107 of Figure 1. Operational scenario 600b includes chatbot instance 601b and application instance 603b, each of which are substantively the same as chatbot instance 601a and application instance 603a of Figure 6A.

As shown in chatbot instance 601b, the user (i.e., Susan or user 103) submits to chatbot instance 601b "I don't need any 20F11ND8P0JA0NNNNN AC Drives, I have available spares of these from a previous project" in order to inform suite assistant 110 that suggested bill of materials 625a as shown in Figure 6A contains an unnecessary element (the AC drives). Suite assistant 110 inputs a response to chatbot instance 601b stating "No worries, I have removed the AC Drives. Any other changes or shall we proceed to ordering the equipment?" Notably, at this point, application instance 603b is populated with an updated suggested bill of materials, referred to as suggested bill of materials 625b. As shown in Figure 6B, suggested bill of materials 625b shows the item 20F11ND8P0JA0NNNNN AC Drives crossed out. Further, suggested bill of materials 625b shows a revised total cost for suggested bill of materials 625b reflecting that the AC Drives are no longer included.

User 103 submits the response "Go ahead and order" to chatbot instance 603b, indicating to suite assistant 110 that once the 20F11ND8P0JA0NNNNN AC Drives are removed, suggested bill of materials 625b can be purchased on behalf of user 103. In some cases, suite assistant 110 can be preauthorized to make such purchases on behalf of user 103, while in other cases, user 103 may affect the purchase without the aid of suite assistant 110. Based on the input from user 103, suite assistant executes a purchase of the items listed in suggested bill of materials 625b.

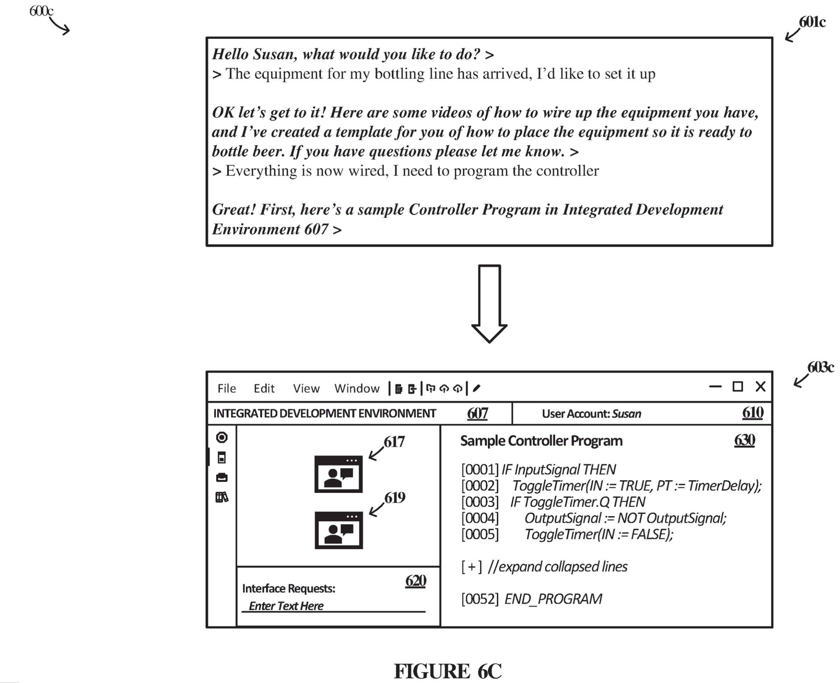

Figure 6C illustrates operational scenario 600c in accordance with some embodiments of the present technology. Operational scenario 600c may be considered with regard to the elements of Figure 1 and Figure 3, respectively. In particular, the elements and techniques described in operational scenario 600c may be implemented in the context of interface 107 of Figure 1. Operational scenario 600c includes chatbot instance 601c and application instance 603c, each of which are substantively the same as chatbot instance 601a and application instance 603a each of Figure 6A and chatbot instance 601b and application instance 603b each of Figure 6B.

As shown in chatbot instance 601c, suite assistant 110 submits the query "hello Susan, what would you like to do" to chatbot instance 601c. The user (i.e., Susan or user 103) responds to suite assistant 110 by submitting "the equipment for my bottling line has arrived, I'd like to set it up" to chatbot instance 601c. Suite assistant 110 responds to this input by providing, in an integrated development environment of application instance 603c, demonstration video 617 and demonstration video 619. Each of demonstration video 617 and demonstration video 619 are responsive to the input of user 103 in that each of demonstration video 617 and demonstration video 619 assist in the setting of the equipment needed for the bottling line.

User 103 then submits "everything is now wired, I need to program the controller" to chatbot instance 601c. In response, suite assistant 110 populates application instance 603c with sample controller program 630. Sample controller program 630 is representative of a controller program that can be used by user 103 as a reference for the programming of a controller.

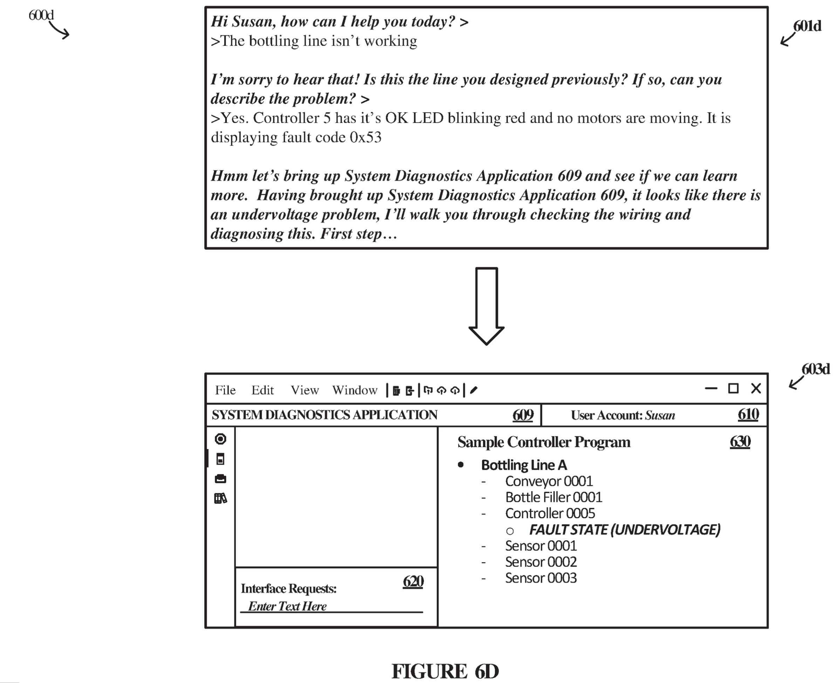

**Figure 6D** illustrates operational scenario 600d in accordance with some embodiments of the present technology. Operational scenario 600d may be considered with regard to the elements of Figure 1 and Figure 3, respectively. In particular, the elements and techniques described in operational scenario 600d may be implemented in the context of interface 107 of Figure 1. Operational scenario 600d includes chatbot instance 601d and application instance 603d, each of which are substantively the same as chatbot instance 601a and application instance 603a each of Figure 6A, chatbot instance 601b and application instance 603b each of Figure 6B, and chatbot instance 601c and application instance 603c each of Figure 6 chatbot instance 601b and application instance 603b each of Figure 6C.

As shown in chatbot instance 601d, suite assistant 110 submits the query "hello Susan, how can I help you today" to chatbot instance 601d. The user (i.e., Susan or user 103) responds to suite assistant 110 by submitting "the bottling line isn't working" to chatbot instance 601c. In some cases, suite assistant 110 may reference the earlier instances of chatbot (i.e., chatbot instance 601a, chatbot instance 601b, or chatbot instance 601c) to contextualize current input. Based on the earlier instances of chatbot, suite assistant 110 knows that user 103 (Susan) created a bottling line using specific components suggested by suite assistant 110. Using this knowledge, suite assistant 110 can begin assisting user 103 in troubleshooting the problem. In some cases, suite assistant 110 may request contextual information from user 103 via chatbot instance 603d. Here, suite assistant 110 asks user 103 for confirmation that the bottling line in question was the bottling line Susan had previously designed and implemented. Additionally, suite assistant 110 asks for a description of the problem.

User 103 responsively submits "Yes. Controller 5 has its *OK LED* blinking red and no motors are moving. It is displaying fault code 0x53" to chatbot instance 603d. Based on this information, suite assistant 110 determines troubleshooting steps responsive to the issue that user 103 can take and provides the steps via application instance 603d. In some cases, suite assistant 110 may provide troubleshooting steps or other insight to user 103 directly through chatbot instance 601d, while in other cases, suite assistant 110 may provide troubleshooting steps or other insight to user 103 via application instance 603d. In some cases, suite assistant 110 leverages a machine learning model to determine how to respond to the request of user 103. In such cases, suite assistant 110 may submit a prompt to a generative artificial intelligence model that, in response, causes the generative artificial intelligence model to output one or more of an application, selections of configurable elements of applications, troubleshooting steps, and other information relevant to the request of user 103.

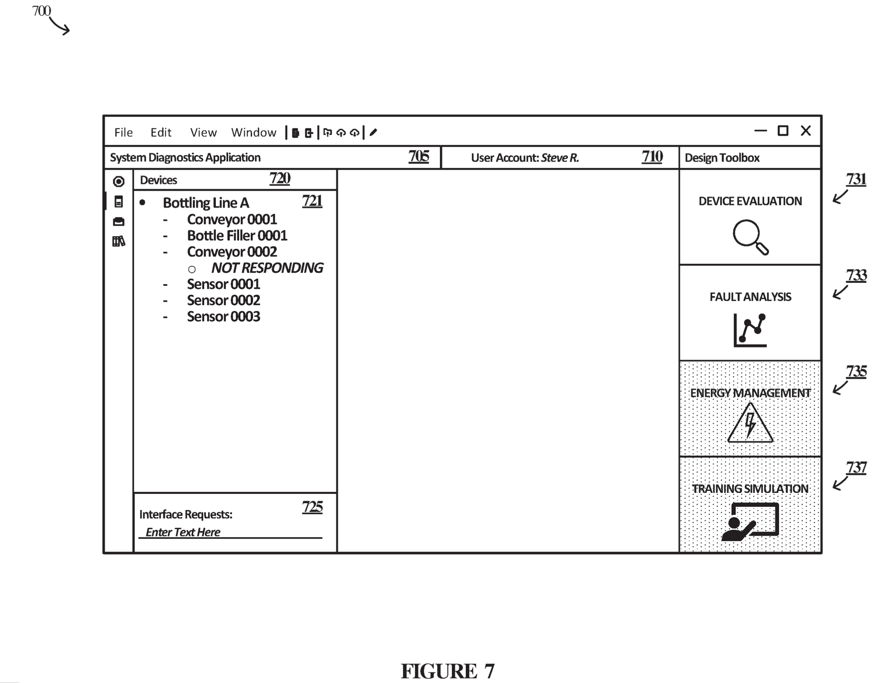

**Figure 7** illustrates computing application interface 700. Application interface 700 includes application name 705, user account 710, devices tab 720, devices 721, interface requests 725, device evaluation 731, fault analysis 733, energy management 735, and training simulation 737. Application interface 700 may be considered with regard to the techniques and elements of Figure 1 and Figure 3, respectively. Application interface is substantively the same as interface 107 of Figure 1, though additional detail is illustrated in application interface 700 that may not have been shown in interface 107 for the sake of clarity. Application interface 700 may be implemented via a computing device, such as computing device 105 of Figure 1. In other embodiments than that illustrated in application interface 700, there may be more, or fewer interface elements included in application interface 700.

Application interface 700 is generally representative of an interface including one or more interactable elements and one or more configurable elements associated with an application, such as software application 131. In particular, application interface 700 is provided to a user (e.g., user 103 of Figure 1) in association with a software application and one or more selections of configurable elements identified by a suite assistant (e.g., suite assistant 110 of Figure 1) in response to a query from the user. Examples of processes in which a suite assistant identifies a software application and one or more selections of configurable elements for the software application are given by method 200 of Figure 2 and by further method 400 of Figure 4.

Application name 705 is representative of an interface element for displaying a name of or a reference to the application that application interface 700 is associated with. For example, where application interface 700 is associated with an industrial automation design application, application name 705 may show "Industrial Automation Design Application." In some cases, application name 705 may show a trade name corresponding to the software application. For instance, the application associated with application interface 700 may constitute an industrial automation design application, but application name 705 may show a proprietary name or brand name associated with the software application, such as FACTORY TALK DESIGN STUDIO^{®}.

User account 710 is representative of an interface element for displaying a name of or a reference to a user account associated with a user (e.g., user 103 of Figure 1). In Figure 7, user account 710 is shown to reference a single user account (*"Steve R.*") that is logged in to the software application associated with application interface 700, though in other scenarios, other user accounts may be displayed in user account 710. Contextual information corresponding to the user and therefore with the account displayed in user account 710 can be used to inform the elements shown in application interface 700. For example, user *Steve R.* may be associated with a malted beverage production facility that utilizes a variety of industrial devices and automation processes. When logged in to the software application associated with application interface 700, the devices relating to and in use by that malted beverage production facility are illustrated. Further contextual information that informs how application interface 700 is shown may be associated with the user account, such as the role of a user, the skill of a user, the enterprise associated with a user, historical behavior of a user, and the like.

Devices tab 720 is representative of an interface element that, when selected, modifies the visible and interactable elements of application interface 700 in some way. In particular, devices tab 720, when selected, causes application interface 700 to show the devices associated with the account and corresponding user shown in user account 710. In some embodiments, devices tab 720 may be one of multiple tabs shown.

Devices 721 is representative of an interface element for displaying industrial devices associated with an account and corresponding user shown in user account 710. In some embodiments, devices 721 display a state, condition, fault, or some other indicator associated with any of the industrial devices shown in devices 721. As shown in Figure 7, devices 721 shows *Bottling Line A,* which includes constituent elements *conveyor 0001, bottle filler 0001, conveyor 0002, sensor 0001, sensor 0002,* and *sensor 0003.* Further, *conveyor 0002* is illustrated with a *"NOT RESPONDING"* indication, meaning that the industrial device labeled *conveyor 0002* is not responding to queries in an anticipated way or is potentially not responding at all. In some cases, such as where a user account is not associated with contextual information for the user, or where no user account is logged in, the industrial devices shown in devices 721 may be identified and populated through analysis of the query submitted by the user.

Interface requests 725 is representative of an interface element for entering text for an interface request. An interface request, as used herein, describes a request from a user to modify, reveal, hide, or to perform another action relating to how application interface 700 is shown. For example, an element of the software application associated with application interface 700 may not be relevant to the query or may not be relevant for some other reason. As a result, when application interface 700 is provided to the user, those elements may be obscured, greyed out, disabled, or hidden to some degree by some other means. Should a user wish to change something about application interface 700 as it was presented to the user, the user may submit an interface request that requests that the change is made. In response, the suite assistant modifies application interface 700. In some cases, the modifications are carried out by the software application associated with application interface 700.

Each of device evaluation 731, fault analysis 733, energy management 735, and training simulation 737 are representative of tools included in the software application associated with application interface 700. Each of device evaluation 731, fault analysis 733, energy management 735, and training simulation 737 represent some functionality of the software application. Device evaluation 731 is representative of a tool for evaluating the industrial devices shown in devices 721. Fault analysis 733 is representative of a tool for analyzing a fault associated with any of the devices shown in devices 721. For example, fault analysis 733 may be used to analyze *conveyor 0002* of devices 721 to understand the nature of the *NOT RESPONDING* indicator. Energy management 735 is representative of a tool for evaluating energy consumption rates and behavior of the industrial devices shown in devices 721. Training simulation 737 is representative of a tool for training operators how to effectively interact with application interface 700.

As shown in Figure 7, energy management 735 and training simulation 737 are darkened in color, particularly when compared to entirely visible instances of device evaluation 731 and fault analysis 733. The darkened condition of energy management 735 and training simulation 737 represents an obscuring, greying out, disabling, or hiding of energy management 735 and training simulation 737. Energy management 735 and training simulation 737 have been obscured in some way because both tools have been deemed by the suite assistant to be irrelevant to the query submitted by the user. In some cases, energy management 735, training simulation 737, or any other element of application interface 700 may be obscured for other reasons, such inapplicability to a particular user, lack of an active license for a given feature or element, or any other such reason.

In an example operation of the current embodiment, user *Steve R.* submits a query to a suite assistant asking for diagnostic assistance with regard to *Bottling Line A.* The suite assistant, having maintained contextual information about *Steve R.,* is aware of the industrial devices that make up *Bottling Line A,* which software applications *Steve R.* has an active license for, what the role of *Steve R.* is, and a skill level of *Steve R.* inferred from previous activity. Based on the query and the contextual information associated with the user, the suite assistant identifies a software application relevant to the query and identifies one or more selections of configurable elements of the software application. The suite assistant then deploys an instance of the software application and seeds the software application with the one or more selections of configurable elements.

As shown in Figure 7, the suite assistant identifies an industrial automation diagnostics application as the most relevant to the query. The suite assistant then configures the industrial automation diagnostics application to have *Steve R.* shown in user account 710, to have *Bottling Line A* and its constituent elements shown in devices 721, and to obscure energy management 735 and training simulation 737 because they are less relevant, or not relevant at all, to the query. Should the user wish to modify application interface 700 and, for example, reveal one of the obscured elements, the user submits an interface request via interface requests 725 requesting that a given obscured element is made visible or otherwise enabled.

**Figure 8** illustrates computing system 805 used in accordance with some embodiments of the present technology. Computing system 805 is generally representative of a computing device sufficient to execute suite assistant processes 835. In some embodiments, computing system 805 is representative of an industrial controller.

Computing system 805 is representative of a computing device sufficient to execute software and communicate with peripherals. Computing system 805 is representative of any system or collection of systems with which the various operational architectures, processes, scenarios, and sequences disclosed herein. Computing system 805 may be implemented as a single apparatus, system, or device or may be implemented in a distributed manner as multiple apparatuses, systems, or devices. Computing system 805 includes, but is not limited to, processing system 825, storage system 810, software 815, communication interface system 820, and user interface system 830. Processing system 825 is operatively coupled with storage system 810, communication interface system 820, and user interface system 830. Computing system 805 may be representative of a cloud computing device, distributed computing device, or the like.

Processing system 825 loads and executes software 815 from storage system 810. Software 815 includes and implements suite assistant processes 835. When executed by processing system 825 to provide suite assistant processes 835, software 815 directs processing system 825 to operate as described herein for at least the various processes, operational scenarios, and sequences discussed in the foregoing implementations. Computing system 805 may optionally include additional devices, features, or functionality not discussed for purposes of brevity.

Processing system 825 may include a microprocessor and other circuitry that retrieves and executes software 815 from storage system 810. Processing system 825 may be implemented within a single processing device but may also be distributed across multiple processing devices or sub-systems that cooperate in executing program instructions. Examples of processing system 825 include general purpose central processing units, graphical processing units, application specific processors, and logic devices, as well as any other type of processing device, combinations, or variations thereof.

Storage system 810 may include any computer readable storage media readable by processing system 825 and capable of storing software 815. Storage system 810 may include volatile and nonvolatile, removable, and non-removable media implemented in any method or technology for storage of information, such as computer readable instructions, data structures, program modules, or other data. Examples of storage media include random access memory, read only memory, magnetic disks, optical disks, optical media, flash memory, virtual memory and non-virtual memory, magnetic cassettes, magnetic tape, magnetic disk storage or other magnetic storage devices, or any other suitable storage media. In no case is the computer readable storage media a propagated signal.

In addition to computer readable storage media, in some implementations, storage system 810 may also include computer readable communication media over which at least some of software 815 may be communicated internally or externally. Storage system 810 may be implemented as a single storage device but may also be implemented across multiple storage devices or sub-systems co-located or distributed relative to each other. Storage system 810 may include additional elements, such as a controller capable of communicating with processing system 825 or other systems.

Software 815 (including suite assistant processes 835) may be implemented in program instructions and, when executed by processing system 825, can direct processing system 825 to operate as described with respect to the various operational scenarios, sequences, and processes illustrated herein.

In particular, the program instructions may include various components or modules that cooperate or otherwise interact to carry out the various processes and operational scenarios described herein. The various components or modules may be embodied in compiled or interpreted instructions, or in some other variation or combination of instructions. The various components or modules may be executed in a synchronous or asynchronous manner, serially or in parallel, in a single threaded environment or multi-threaded, or in accordance with any other suitable execution paradigm, variation, or combination thereof. Software 815 may include additional processes, programs, or components, such as operating system software, virtualization software, or other application software. Software 815 may also include firmware or some other form of machine-readable processing instructions executable by processing system 825.

In general, software 815 may, when loaded into processing system 825 and executed, transform a suitable apparatus, system, or device (of which computing system 805 is representative) overall from a general-purpose computing system into a special-purpose computing system customized to provide suite assistant processes 835 as described herein. Indeed, encoding software 815 on storage system 810 may transform the physical structure of storage system 810. The specific transformation of the physical structure may depend on various factors in different implementations of this description. Examples of such factors may include, but are not limited to, the technology used to implement the storage media of storage system 810 and whether the computer-storage media are characterized as primary or secondary storage, as well as other factors.

For example, if the computer readable storage media are implemented as semiconductor-based memory, software 815 may transform the physical state of the semiconductor memory when the program instructions are encoded therein, such as by transforming the state of transistors, capacitors, or other discrete circuit elements constituting the semiconductor memory. A similar transformation may occur with respect to magnetic or optical media. Other transformations of physical media are possible without departing from the scope of the present description, with the foregoing examples provided only to facilitate the present discussion.

Communication interface system 820 may include communication connections and devices that allow for communication with other computing systems (not shown) over communication networks (not shown). Examples of connections and devices that together allow for inter-system communication may include network interface cards, antennas, power amplifiers, radiofrequency circuitry, transceivers, and other communication circuitry. The connections and devices may communicate over communication media to exchange communications with other computing systems or networks of systems, such as metal, glass, air, or any other suitable communication media. The media, connections, and devices are well known and need not be discussed at length here.

Communication between computing system 805 and other computing systems (not shown), may occur over a communication network or networks and in accordance with various communication protocols, combinations of protocols, or variations thereof. Examples include intranets, internets, the Internet, local area networks, wide area networks, wireless networks, wired networks, virtual networks, software defined networks, data center buses and backplanes, or any other type of network, combination of networks, or variation thereof. The communication networks and protocols are well known and need not be discussed at length here.

While some examples provided herein are described in the context of an industrial environment, it should be understood that the systems and methods described herein are not limited to such embodiments and may apply to a variety of other industrial environments and their associated systems. As will be appreciated by one skilled in the art, aspects of the present invention may be embodied as a system, method, computer program product, and other configurable systems. Accordingly, aspects of the present invention may take the form of an entirely hardware embodiment, an entirely software embodiment (including firmware, resident software, micro-code, etc.) or an embodiment combining software and hardware aspects that may all generally be referred to herein as a "circuit," "module" or "system." Furthermore, aspects of the present invention may take the form of a computer program product embodied in one or more computer readable medium(s) having computer readable program code embodied thereon.

Unless the context clearly requires otherwise, throughout the description and the claims, the words "comprise," "comprising," and the like are to be construed in an inclusive sense, as opposed to an exclusive or exhaustive sense; that is to say, in the sense of "including, but not limited to." As used herein, the terms "connected," "coupled," or any variant thereof means any connection or coupling, either direct or indirect, between two or more elements; the coupling or connection between the elements can be physical, logical, or a combination thereof. Additionally, the words "herein," "above," "below," and words of similar import, when used in this application, refer to this application as a whole and not to any particular portions of this application. Where the context permits, words in the above Detailed Description using the singular or plural number may also include the plural or singular number, respectively. The word "or," in reference to a list of two or more items, covers all of the following interpretations of the word: any of the items in the list, all of the items in the list, and any combination of the items in the list.

The phrases "in some embodiments," "according to some embodiments," "in the embodiments shown," "in other embodiments," and the like generally mean the particular feature, structure, or characteristic following the phrase is included in at least one implementation of the present technology and may be included in more than one implementation. In addition, such phrases do not necessarily refer to the same embodiments or different embodiments.

The above Detailed Description of examples of the technology is not intended to be exhaustive or to limit the technology to the precise form disclosed above. While specific examples for the technology are described above for illustrative purposes, various equivalent modifications are possible within the scope of the technology, as those skilled in the relevant art will recognize. For example, while processes or blocks are presented in a given order, alternative implementations may perform routines having steps, or employ systems having blocks, in a different order, and some processes or blocks may be deleted, moved, added, subdivided, combined, and/or modified to provide alternative or subcombinations. Each of these processes or blocks may be implemented in a variety of different ways. Also, while processes or blocks are at times shown as being performed in series, these processes or blocks may instead be performed or implemented in parallel or may be performed at different times. Further any specific numbers noted herein are only examples: alternative implementations may employ differing values or ranges.

The teachings of the technology provided herein can be applied to other systems, not necessarily the system described above. The elements and acts of the various examples described above can be combined to provide further implementations of the technology. Some alternative implementations of the technology may include not only additional elements to those implementations noted above, but also may include fewer elements.

These and other changes can be made to the technology in light of the above Detailed Description. While the above description describes certain examples of the technology, and describes the best mode contemplated, no matter how detailed the above appears in text, the technology can be practiced in many ways. Details of the system may vary considerably in its specific implementation, while still being encompassed by the technology disclosed herein. As noted above, particular terminology used when describing certain features or aspects of the technology should not be taken to imply that the terminology is being redefined herein to be restricted to any specific characteristics, features, or aspects of the technology with which that terminology is associated. In general, the terms used in the following claims should not be construed to limit the technology to the specific examples disclosed in the specification, unless the above Detailed Description section explicitly defines such terms. Accordingly, the actual scope of the technology encompasses not only the disclosed examples, but also all equivalent ways of practicing or implementing the technology under the claims.

To reduce the number of claims, certain aspects of the technology are presented below in certain claim forms, but the applicant contemplates the various aspects of the technology in any number of claim forms. For example, while only one aspect of the technology is recited as a computer-readable medium claim, other aspects may likewise be embodied as a computer-readable medium claim, or in other forms, such as being embodied in a means-plus-function claim. Any claims intended to be treated under 35 U.S.C. § 112(f) will begin with the words "means for" but use of the term "for" in any other context is not intended to invoke treatment under 35 U.S.C. § 112(f). Accordingly, the applicant reserves the right to pursue additional claims after filing this application to pursue such additional claim forms, in either this application or in a continuing application.

## Claims

1. A computer-implemented method, comprising:
receiving a query at a suite assistant via a chat interface, wherein the suite assistant is associated with a suite of software applications for industrial automation processes, and wherein the query is received from a user associated with a user account;
processing the query to facilitate a response, wherein the processing comprises:
identifying a particular software application of the suite of software applications, and
identifying one or more selections of configurable elements of the particular software application; and
providing the response, comprising:
launching an instance of the particular software application seeded with the one or more selections.

2. The computer-implemented method of claim 1, at least one of:
wherein the suite assistant comprises a generative artificial intelligence model; and
wherein processing the query further comprises:
generating a prompt for submission to a generative artificial intelligence model.

3. The computer-implemented method of claim 1 or 2, further comprising:
maintaining, by the suite assistant, user account information associated with each of a number of user accounts, wherein the user account information comprises one or more of a role of the user, historical activity of the user, an enterprise of the user, active licenses of the suite of software applications of the user, and a skill level of the user.

4. The computer-implemented method of claim 3, at least one of:
further comprising:
inferring the skill level of the user based at least in part on user interactions with the suite assistant, the user interactions comprising at least the query and the historical activity of the user; and
wherein:
identifying the particular software application further comprises identifying the particular software application based at least in part on the user account information; and
identifying the one or more selections further comprises identifying the one or more selections based at least in part on the user account information.

5. The computer-implemented method of one of claims 1 to 4, wherein launching the instance of the particular software application further comprises:
obscuring, based on at least the user account, one or more viewable elements of a user interface associated with the particular software application; and
providing the user interface to the user.

6. The computer-implemented method of claim 5, the method further comprising:
receiving an interface request from the user via the chat interface; and
based on the interface request, performing by the suite assistant one or more of:
modifying a selection of the one or more selections, and
revealing one or more of the one or more viewable elements.

7. The computer-implemented method of one of claims 1 to 6, wherein the suite of software applications comprises at least one of a customer portal application, a development environment application, an industrial process design application, a data management application, and a data analytics application.

8. The computer-implemented method of one of claims 1 to 7, wherein:
one or more of the suite of software applications are cloud-based applications; and
launching the instance of the particular software application further comprises launching the instance of the particular software application in a web application environment.

9. A system, comprising:
a chat interface;
a suite of software applications for industrial automation processes;
a suite assistant associated with the suite of software applications, wherein the suite assistant is configured to:
receive a query via the chat interface, wherein the query is received from a user associated with a user account,
process the query to facilitate a response, wherein to process the query comprises:
identifying a particular software application of the suite of software applications; and
identifying one or more selections of configurable elements of the particular software application, and
provide the response, wherein to provide the response, the suite assistant is configured to:
launch an instance of the particular software application seeded with the one or more selections.

10. The system of claim 9, at least one of:
wherein the suite assistant comprises a generative artificial intelligence model; and
wherein to process the query, the suite assistant is further configured to:
generate a prompt for submission to a generative artificial intelligence model.

11. The system of claim 9 or 10, wherein the suite assistant is further configured to:
maintain user account information associated with each of a number of user accounts, wherein the user account information comprises one or more of a role of the user, historical activity of the user, an enterprise of the user, active licenses of the suite of software applications of the user, and a skill level of the user.

12. The system of claim 11, at least one of:
wherein the suite assistant is further configured to:
infer the skill level of the user based at least in part on user interactions with the suite assistant, the user interactions comprising at least the query and the historical activity of the user; and
wherein:
to identify the particular software application, the suite assistant is further configured to identify the particular software application based at least in part on the user account information; and
to identify the one or more selections, the suite assistant is further configured to identify the one or more selections based at least in part on the user account information.

13. The system of one of claims 9 to 12, wherein to launch the instance of the particular software application, the suite assistant is further configured to:
obscure, based on at least the user account, one or more viewable elements of a user interface associated with the particular software application; and
provide the user interface to the user.

14. The system of claim 13, wherein the suite assistant is further configured to:
receive an interface request from the user via the chat interface; and
based on the interface request, to:
modify a selection of the one or more selections, and
reveal one or more of the one or more viewable elements.

15. The system of one of claims 9 to 14, at least one of:
wherein the suite of software applications comprises at least one of a customer portal application, a development environment application, an industrial process design application, a data management application, and a data analytics application; and
wherein:
one or more of the suite of software applications are cloud-based applications; and
to launch the instance of the particular software application, the suite assistant is further configured to launch the instance of the particular software application in a web application environment.
